# EUROPÄISCHE PATENTSCHRIFT

(11) **EP 2 447 033 B1**
(45) Veröffentlichungstag und Bekanntmachung des Hinweises auf die Patenterteilung: **19.04.2017**
(21) Anmeldenummer: 11174139.3
(22) Anmeldetag: 15.07.2011
(51) Int. Cl.: B29C 45/17, B29C 45/18, B29K 67/00, B29K 105/26, B01J 8/08, B29B 9/16, B29B 13/02, B29B 17/00, C08J 11/06, F26B 23/00, B29C 31/00

(54) **Verfahren und Vorrichtung zum Herstellen von Kunststoffbehältern und/oder Kunststoffvorformlingen**
Method and apparatus for manufacturing plastic containers and/or plastic pre-forms
Procédé et dispositiv de fabrication de récipients en plastique et/ou de préformes en plastique

(30) Priorität: 26.10.2010 DE 102010042965
(43) Veröffentlichungstag der Anmeldung: 02.05.2012
(73) Patentinhaber: Krones AG, 93073 Neutraubling (DE)
(72) Erfinder: Forsthövel, Jochen, 93073 Neutraubling (DE)
(74) Vertreter: Grünecker Patent- und Rechtsanwälte PartG mbB

(56) Entgegenhaltungen:
- WO-A1-03/045542
- WO-A1-2004/080691
- WO-A1-2006/021118
- WO-A1-2007/065184
- WO-A2-2005/028531
- WO-A2-2005/092591
- WO-A2-2007/116022
- JP-A- 2000 280 288
- US-A- 5 440 005
- N.N.: "Preforms/PET-bottles", , 7. Oktober 2010 (2010-10-07), Seiten 1-5, XP002666473, Gefunden im Internet: URL:http://www.motan-colortronic.com/en/so lutions/injection-moulding/preformspet-bot tles.html [gefunden am 2011-12-28]
- N.N.: "Viscotec - Food grade PCR PET", , 6. Oktober 2010 (2010-10-06), Seiten 1-4, XP002666474, Gefunden im Internet: URL:http://www.viscotec.at/assets/Uploads/ Dokumente/ViscotecPETFolderG2X1a.pdf [gefunden am 2011-12-28]
- N.N.: "Viscotec - Solid State Polycondensation Plant", , August 2010 (2010-08), Seiten 1-2, XP002666475, Gefunden im Internet: URL:http://www.viscotec.at/assets/Uploads/ Dokumente/viscoSTAR.pdf [gefunden am 2011-12-28]
- N.N.: "Viscotec - Decontamination Dryer", , August 2010 (2010-08), Seiten 1-2, XP002666476, Gefunden im Internet: URL:http://www.viscotec.at/assets/Uploads/ Dokumente/deCON.pdf [gefunden am 2011-12-28]
- MÜLLER, K. ; WELLE, F.: "PET in der Getränkeverpackung", KUNSTSTOFFE, [Online] Oktober 2005 (2005-10), Seiten 120-125, XP002666477, Gefunden im Internet: URL:http://www.kunststoffe.de/directlink.a sp?KU103367> [gefunden am 2011-12-28]

## Beschreibung

Die Erfindung betrifft ein Verfahren und eine Vorrichtung zum Herstellen von Kunststoffbehältern und/oder Kunststoffvorformlingen mit einer Spritzgießmaschine.

Kunststoffbehälter, beispielsweise Kunststoffflaschen, finden häufig Anwendung als Behälter für flüssige Produkte, etwa für Getränke. Die Herstellung von Kunststoffbehältern kann direkt in einer Spritzgießmaschine unter Verwendung von thermoplastischem Kunststoffmaterial geschehen. Ein anderes bekanntes Verfahren zum Herstellen der Kunststoffbehälter umfasst zunächst ein Erzeugen von Kunststoffvorformlingen in einer Spritzgießmaschine. Diese Kunststoffvorformlinge werden dann in einer Blasformmaschine zu den gewünschten Kunststoffbehältern ausgeformt. Dafür werden die Kunststoffvorformlinge thermisch konditioniert und dann in sogenannten Blasformen unter Druckluftbeaufschlagung zu Behältern ausgeformt.

Zur Herstellung der Behälter und/oder der Vorformlinge in der Spritzgießmaschine wird häufig nicht nur neuwertiges Kunststoffgranulat verwendet, sondern auch wiederaufbereitetes (recyceltes) Kunststoffmaterial, sogenanntes Kunststoffrezyklat. Das Kunststoffrezyklat kann beispielsweise aus bereits verwendeten Kunststoffbehältern gewonnen werden, die durch den Verbraucher der Wiederverwertung zugeführt wurden. Dabei ist es erforderlich, die alten Behälter zu zerkleinern und die somit erhaltenen Kunststoffflakes von Verunreinigungen zu befreien und zu dekontaminieren.

Ein Nachteil der bekannten Verfahren ist es, dass sowohl im Recyclingprozess als auch im Herstellungsprozess viele Verfahrensschritte bei hohen Temperaturen durchgeführt werden müssen und daher ein energieaufwändiges Erwärmen des Kunststoffmaterials erfordern.

Aus der WO 2005/028531 ist ein Verfahren zur Minimierung des Energieverbrauchs während der Herstellung von PET bekannt. Amorphe Pellets werden bei erhöhter Temperatur kristallisiert und anschließend in einen Reaktor für die Festphasenpolymerisation eingeführt. Wärme von heißen Pellets aus dem Reaktor für die Festphasenpolymerisation wird auf kalte Pellets übertragen, welche die Zufuhr in einen Kristallisator bilden.

Aus der WO 2004/080691 ist ein Verfahren zum Herstellen einer PET-Folie bekannt, wobei neues PET-Granulat mit trockener Luft getrocknet wird. Regranulat wird ebenfalls mit trockener Luft getrocknet. Das getrocknete neue PET-Granulat wird gekühlt, wobei Luft vom Kühlen des getrockneten neuen PET-Granulats verwendet wird, um das neue PET-Granulat zu trocknen

Aus der JP2000280288 ist ein Spritzgießverfahren und eine Spritzgießmaschine zur Herstellung von mehrschichtigen PET-Preforms aus Rezyklat und Neuware bekannt.

Aufgabe der vorliegenden Erfindung ist es, ein energieeffizienteres Verfahren zum Herstellen von Kunststoffbehältern und/oder Kunststoffvorformlingen bereitzustellen. Diese Aufgabe wird durch ein Verfahren gemäß Patentanspruch 1 gelöst.

Dadurch, dass zum Erwärmen des Kunststoffneumaterials wenigstens ein Teil der im erwärmten Kunststoffrezyklat enthaltenen Wärmemenge verwendet wird, kann ein energieeffizienteres Verfahren zum Herstellen von Kunststoffbehältern und/oder Kunststoffvorformlingen bereitgestellt werden. Insbesondere kann dadurch Wärme aus dem Recyclingprozess zum Erwärmen des Kunststoffneumaterials genutzt werden.

Mit anderen Worten, kann wenigstens ein Teil der Wärme des erwärmten Kunststoffrezyklats abgeführt und dem Kunststoffneumaterial zugeführt werden.

Die herzustellenden Kunststoffbehälter können insbesondere einen thermoplastischen Kunststoff, beispielsweise PET (Polyethylenterephthalat), umfassen.

Bei dem Kunststoffbehälter kann es sich insbesondere um eine Kunststoffflasche, beispielsweise eine PET-Flasche, handeln. Ein Kunststoffvorformling oder Kunststoffpreform kann derart ausgebildet sein, dass er in einem Blasformvorgang durch Beaufschlagung mit Druckluft in einer Blasform zu einem Kunststoffbehälter, beispielsweise einer Kunststoffflasche, ausgeformt werden kann. Zusätzlich zum Beaufschlagen mit Druckluft kann in der Blasform auch eine Reckung des Vorformlings mittels einer Reckstange durchgeführt werden.

Unter einem Kunststoffrezyklat kann hierin insbesondere ein wiederaufbereitetes Kunststoffmaterial verstanden werden. Das Kunststoffrezyklat kann insbesondere aus recycelten Kunststoffbehältern hergestellt werden, die durch Verbraucher der Wiederverwertung zugeführt wurden. Dazu können die recycelten Kunststoffflaschen zunächst zerkleinert werden. Dabei können sog. Kunststoffflakes, also 5 bis 20 mm große Kunststoffstücke, gebildet werden. Diese Kunststoffflakes können in weiterer Folge von Fremdkörpern befreit und gereinigt werden.

Mit anderen Worten kann das Bereitstellen des Kunststoffrezyklats ein Zerkleinern von recycelten Kunststoffbehältern zu Kunststoffflakes umfassen.

Als Kunststoffneumaterials kann hierin insbesondere Kunststoffmaterial verstanden werden, das nicht in einem Recyclingprozess aus wiederverwerteten Kunststoffbehältern gewonnen wurde. Das Kunststoffneumaterial kann beispielsweise in Form von Kunststoffgranulat vorliegen.

Das Erwärmen des Kunststoffrezyklats kann insbesondere Teil des Recycelingverfahrens sein.

Das Kunststoffrezyklat kann auf eine Temperatur erwärmt werden, die über der zum Einbringen und/oder Verarbeiten in der Spritzgießmaschine erforderlichen Temperatur liegt, wobei wenigstens ein Teil der über der zum Einbringen und/oder Verarbeiten in der Spritzgießmaschine erforderlichen Temperatur liegenden Wärmemenge zum Erwärmen des Kunststoffneumaterials verwendet wird.

Die zum Einbringen und/oder Verarbeiten in der Spritzgießmaschine erforderliche Temperatur kann zwischen 140° C und 180° C, insbesondere 160° C, betragen.

Das Kunststoffrezyklat kann derart erwärmt werden, dass das Kunststoffrezyklat durch das Erwärmen wenigstens teilweise dekontaminiert wird. Dafür kann das Kunststoffrezyklat insbesondere auf Temperaturen über dem zum Einbringen in die und/oder Verarbeiten in der Spritzgießmaschine erforderlichen Temperatur insbesondere über 180 °C, erwärmt werden. Mit anderen Worten kann das Erwärmen des Kunststoffrezyklats einem Dekontaminieren des Kunststoffrezyklats, insbesondere bei einer Temperatur über 180 °C, entsprechen.

Das Erwärmen des Kunststoffrezyklats kann auch eine Festphasenkondensation (SSP) bei Temperaturen über 180 °C umfassen, wobei unter einer Festphasenkondensation auch die Erhöhung des IV-Wertes (Intrinsische Viskosität) verstanden werden kann.

Unter "Dekontaminieren" kann hierbei insbesondere ein Entfernen von Verunreinigungen und/oder unerwünschten Substanzen aus dem Kunststoffrezyklat verstanden werden. Mit anderen Worten sollen Kontaminanten aus dem Kunststoffrezyklat entfernt werden.

Das Kunststoffneumaterial kann auf eine Temperatur zwischen 140° C und 180° C, insbesondere auf 160 °C, erwärmt werden. Damit kann zum einen eine Trocknung des Kunststoffneumaterials erreicht werden, zum anderen kann damit das Kunststoffneumaterial auf die zum Einbringen in die und/oder Verarbeiten in der Spritzgießmaschine erforderliche Temperatur gebracht werden.

Das Erwärmen des Kunststoffneumaterials umfasst erfindungsgemäß:
Vorbeiführen eines Wärmetransportmittels am erwärmten Kunststoffrezyklat zum Erwärmen des Wärmetransportmittels und
Vorbeiführen des erwärmten Wärmetransportmittels am Kunststoffneumaterial.

Dadurch kann auf einfache Weise Wärme vom erwärmten Kunststoffrezyklats zum Kunststoffneumaterial transportiert werden.

Das Wärmetransportmittel kann insbesondere Trockenluft und/oder ein Inertgas umfassen oder Trockenluft und/oder ein Inertgas sein.

Das Inertgas kann beispielsweise Stickstoff und/oder ein Edelgas, beispielsweise Helium, sein bzw. umfassen.

Das Wärmetransportmittel kann direkt und/oder indirekt am erwärmten Kunststoffrezyklat und/oder am Kunststoffneumaterial vorbeigeführt werden. Mit anderen Worten kann das Wärmetransportmittel direkt mit dem erwärmten Kunststoffrezyklat und/oder dem Kunststoffneumaterial in Kontakt kommen. Dadurch kann ein direkter Wärmeaustausch zwischen dem erwärmten Kunststoffrezyklat und/oder dem Kunststoffneumaterial und dem Wärmetransportmittel erreicht werden.

Alternativ oder zusätzlich kann das Wärmetransportmittel indirekt am erwärmten Kunststoffrezyklat und/oder am Kunststoffneumaterial vorbeigeführt werden. Mit anderen Worten kann das Wärmetransportmittel getrennt vom erwärmten Kunststoffrezyklat und/oder vom Kunststoffneumaterial an diesem vorbeigeführt werden, beispielsweise in einer Leitung.

Dadurch kann ein direkter Kontakt zwischen dem erwärmten Kunststoffrezyklat und/oder dem Kunststoffneumaterial und dem Wärmetransportmittel verhindert werden. Der Bereich in dem das Wärmetransportmittel am erwärmten Kunststoffrezyklat und/oder Kunststoffneumaterial vorbeigeführt wird kann dabei von dem Bereich in dem das erwärmte Kunststoffrezyklat und/oder das Kunststoffneumaterial angeordnet ist durch eine wärmeleitende oder wärmedurchlässige Wand getrennt sein.

Die wärmedurchlässige Wand kann ein wärmeleitendes Material, beispielweise ein Metall, insbesondere Edelstahl, umfassen. Die wärmedurchlässige Wand kann derart ausgebildet sein, dass das Wärmetransportmittel durch das erwärmte Kunststoffrezyklat erwärmt werden kann bzw. dass das Kunststoffneumaterial durch das erwärmte Wärmetransportmittel erwärmt werden kann.

Das Wärmetransportmittel kann im Gegenstrom am erwärmten Kunststoffrezyklat und/oder am Kunststoffneumaterial vorbeigeführt werden. Dadurch kann die Relativgeschwindigkeit vom Wärmetransportmittel zum erwärmten Kunststoffrezyklat und/oder zum Kunststoffneumaterial erhöht und der Wärmeaustausch verbessert werden. Zusätzlich zur Verwendung eines Wärmetransportmittels kann das Erwärmen des Kunststoffneumaterials ein Anordnen des erwärmten Kunststoffrezyklats und des Kunststoffneumaterials in zwei wenigstens teilweise durch eine wärmedurchlässige Wand verbundene Behälter umfassen. Mit anderen Worten kann das erwärmte Kunststoffrezyklat in einem ersten Behälter und das Kunststoffneumaterials in einem zweiten Behälter angeordnet werden, wobei der erste Behälter und der zweite Behälter wenigstens teilweise durch eine wärmedurchlässige Wand verbunden sind. Dadurch kann eine indirekte Wärmeübertragung vom erwärmten Kunststoffrezyklat an das Kunststoffneumaterial erreicht werden.

Unter einer wärmedurchlässigen oder wärmeleitenden Wand kann hierin insbesondere eine Behälterwandung verstanden werden, die ein wärmeleitendes Material umfasst oder aus einem solchen besteht.

Die Wärmeleitfähigkeit der wärmedurchlässigen Wand, insbesondere des wärmeleitenden Materials, kann wenigstens 15 W/(K·m), insbesondere wenigstens 40 W/(K·m), betragen. Gemäß einer bevorzugten Ausführungsform kann die Wärmeleitfähigkeit wenigstens 300 W/(K m) betragen.

Der Behälter oder Reservoir für das Kunststoffneumaterial kann wenigstens teilweise im Inneren des Behälters oder Reservoirs für das erwärmte Kunststoffrezyklat angeordnet sein.

Insbesondere können der Behälter für das erwärmte Kunststoffrezyklat und/oder der Behälter für das Kunststoffneumaterial jeweils als Fallrohr ausgebildet sein, insbesondere als konzentrische Fallrohre. In diesem Fall kann das Anordnen des erwärmten Kunststoffrezyklats und des Kunststoffneumaterials in zwei durch eine wärmedurchlässige Wand verbundene Behälter ein Einbringen des Kunststoffrezyklats und/oder des Kunststoffneumaterials in das jeweilige Fallrohr umfassen, oder diesem entsprechen.

Das erfindungsgemäße Verfahren kann außerdem ein Herstellen, insbesondere Spritzgießen, wenigstens eines Kunststoffbehälters und/oder wenigstens eines Kunststoffvorformlings in der Spritzgießmaschine unter Verwendung des erwärmten Kunststoffrezyklats und des erwärmten Kunststoffneumaterials umfassen. Mit anderen Worten kann wenigstens ein Kunststoffbehälter und/oder wenigstens ein Kunststoffvorformling aus dem erwärmten Kunststoffrezyklat und dem erwärmten Kunststoffneumaterial spritzgegossen werden.

Die Erfindung stellt außerdem eine Vorrichtung zum Herstellen von Kunststoffbehältern und/oder Kunststoffvorformlingen gemäß Anspruch 11 bereit.

Durch eine derartige Vorrichtung ist es möglich, Wärme aus dem Recyclingprozess zum Erwärmen des Kunststoffneumaterials zu nutzen.

Die Vorrichtung kann insbesondere zum Durchführen eines oben genannten Verfahrens ausgebildet sein. Das Kunststoffrezyklat, das Kunststoffneumaterial, die Kunststoffbehälter und/oder die Kunststoffvorformlinge können insbesondere eines oder mehrere der oben genannten Merkmale aufweisen.

Die Vorrichtung umfasst erfindungsgemäß eine Transportvorrichtung zum Transport eines Wärmetransportmittels, die derart ausgebildet ist, dass das Wärmetransportmittel am erwärmten Kunststoffrezyklat zum Erwärmen des Wärmetransportmittels vorbeigeführt wird, und dass das erwärmte Wärmetransportmittel am Kunststoffneumaterial vorbeigeführt wird. Dadurch kann ein Wärmetransport vom erwärmten Kunststoffrezyklat zum Kunststoffneumaterial erreicht werden. Die Vorrichtung kann außerdem einen Behälter oder Reservoir für das erwärmte Kunststoffrezyklat und einen Behälter oder Reservoir für das Kunststoffneumaterial umfassen, wobei die Behälter wenigstens teilweise durch eine wärmedurchlässige Wand verbunden sind. Der Behälter für das erwärmte Kunststoffrezyklat, der Behälter für das Kunststoffneumaterials und/oder die wärmedurchlässige Wand können insbesondere eines oder mehrere der oben genannten Merkmale aufweisen.

Insbesondere kann der Behälter für das Kunststoffneumaterial wenigstens teilweise im Inneren des Behälters für das erwärmte Kunststoffrezyklat angeordnet sein.

Die Vorrichtung kann insbesondere einer Blockmaschine umfassend eine Recyclinganlage und eine Spritzgießmaschine entsprechen.

Weitere Merkmale und Vorteile der Erfindung werden nachfolgend anhand der beispielhaften Figuren erläutert. Dabei zeigt:
- Figur 1: eine Illustration eines beispielhaften Verfahrens zum Herstellen von Kunststoffbehältern und/oder Kunststoffvorformlingen; und
- Figur 2: eine Illustration eines weiteren beispielhaften Verfahrens zum Herstellen von Kunststoffbehältern und/oder Kunststoffvorformlingen.

Im Kunststoffrecyclingprozess ist es notwendig, dass aus gebrauchten Kunststoffbehältern gewonnene Kunststoffrezyklat bei hohen Temperaturen, insbesondere bei mehr als 180 °C, zu dekontaminieren bzw. die Molekülketten zu verlängern (Festphasenkondensation, SSP). Diese Temperaturen liegen üblicherweise über dem Niveau, das zum Einbringen in die Spritzgießmaschine bzw. zum Bearbeiten in der Spritzgießmaschine erforderlich ist.

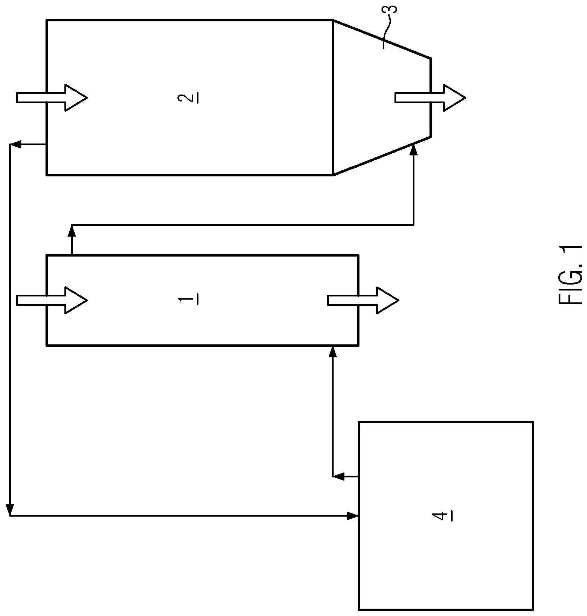

Figur 1 illustriert ein beispielhaftes Verfahren zum Herstellen von Kunststoffbehältern und/oder Kunststoffvorformlingen mit einer Spritzgießmaschine. Die Spritzgießmaschine selbst ist in der Figur 1 nicht dargestellt.

Zum Herstellen der Kunststoffbehälter und/oder Kunststoffvorformlinge wird zum einen Kunststoffrezyklat und zum anderen Kunststoffneumaterial verwendet.

Im Recyclingverfahren wird recyceltes Kunststoffmaterial zunächst zu Flakes zerkleinert. Diese werden dann gereinigt und zur Dekontamination/SSP auf eine Temperatur über 180 °C erwärmt.

Das Kunststoffneumaterial liegt zunächst üblicherweise bei Raumtemperatur vor, also bei etwa 20 °C. Zum Trocknen und zum Einbringen in die Spritzgießmaschine muss dieses Kunststoffneumaterial erwärmt werden. Das Erwärmen des Kunststoffneumaterials wird unter Verwendung wenigstens eines Teils der im erwärmten Kunststoffrezyklat enthaltenen Wärmemenge durchgeführt. Insbesondere kann die Überschusstemperatur des Kunststoffrezyklats, die durch das Dekontaminieren des Kunststoffrezyklats erreicht wird, zum Erwärmen des Kunststoffneumaterials verwendet werden. Dies hat außerdem den Vorteil, dass das Kunststoffrezyklat dadurch gekühlt wird und somit die Gefahr einer thermischen und hydrolytischen Schädigung des Kunststoffrezyklats verringert wird.

In dem Beispiel in Figur 1 wird das erwärmte Kunststoffrezyklat zunächst in einem ersten Behälter 1 bereitgestellt. Das Kunststoffneumaterial wird in einem zweiten Behälter 2 bereitgestellt, der außerdem einen Trocknungstrichter 3 umfasst. Der erste Behälter 1 und der zweite Behälter 1 sind in diesem Beispiel als Fallrohre ausgebildet. Mit anderen Worten wird das erwärmte Kunststoffrezyklat oben in den Behälter 1 eingebracht. Im unteren Bereich des Behälters 1 kann das erwärmte Kunststoffrezyklat entnommen und einer Spritzgießmaschine zugeführt werden.

Analog kann Kunststoffneumaterials von oben in den Behälter 2 eingebracht werden. Im Bereich des Trocknungstrichters 3 kann es entnommen und an die Spritzgießmaschine weitergeleitet werden.

Figur 1 zeigt außerdem einen Trockenlufttrockner 4, der Trockenluft als Wärmetransportmittel zunächst in den ersten Behälter 1 einbringt, wo es im Gegenstrom direkt am Kunststoffrezyklat vorbeigeführt wird. Dadurch erwärmt sich die Trockenluft. Die erwärmte Trockenluft wird dann in den Trocknungstrichter 3 eingebracht und nach oben am Kunststoffneumaterial vorbeigeführt. Dabei kann die erwärmte Trockenluft das Kunststoffneumaterial erwärmen. Das Wärmetransportmittel wird dann an den Trockenlufttrockner 4 zurückgeleitet, wodurch ein Trockenluftkreislauf gebildet wird.

Der Trockenlufttrockner kann in diesem Fall derart ausgebildet sein, dass er die Eingangstemperatur des Trocknungstrichters 3 regelt, insbesondere zusätzlich die Wärme zuführt, die nicht aus dem Kunststoffrezyklat gewonnen werden kann.

Das Wärmetransportmittel kann alternativ oder zusätzlich zur Trockenluft auch ein Inertgas, beispielsweise Helium, umfassen.

In dem in Figur 1 gezeigten Beispiel können die Stoffströme von Kunststoffrezyklat und Kunststoffneumaterial getrennt ausgebildet sein. Mit anderen Worten könnte das Kunststoffrezyklat und das Kunststoffneumaterial getrennt der Spritzgießmaschine zugeführt werden.

Das Kunststoffneumaterial kann auf eine Temperatur zwischen 140 und 180° C erwärmt werden. Dadurch kann eine Trocknung des Kunststoffneumaterials erreicht und die Temperatur zum Einbringen in die Spritzgießmaschine angepasst werden.

Durch eine in Figur 1 gezeigte Vorrichtung kann also Wärme aus dem Recyclingprozess genutzt werden. Durch die Verblockung der Recyclinganlage mit der Spritzgießmaschine kann auch ein geringerer logistischer Aufwand erreicht werden.

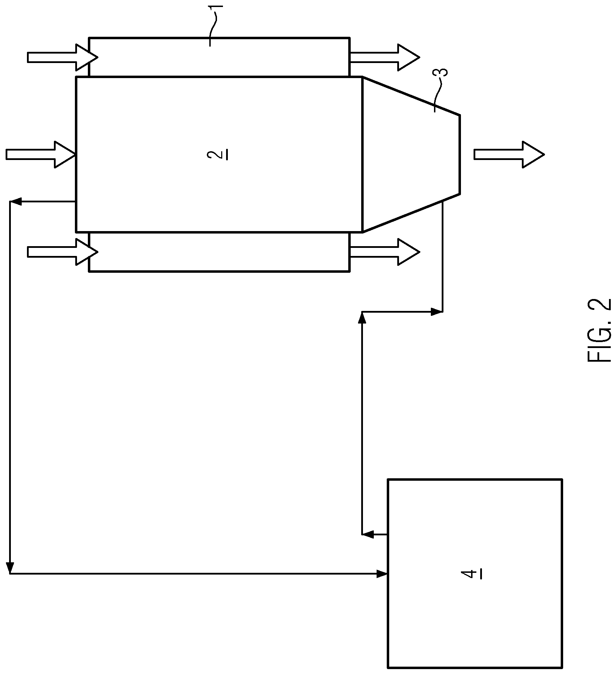

Figur 2 illustriert ein weiteres beispielhaftes Verfahren zum Herstellen von Kunststoffbehältern und/oder Kunststoffvorformlingen. Wie in Figur 1 sind ein erster Behälter 1 für das Kunststoffrezyklat und ein zweiter Behälter 2 für das Kunststoffneumaterial vorgesehen. Der zweite Behälter 2 umfasst einen Trocknungstrichter 3.

In diesem Beispiel sind der erste Behälter 1 und der zweite Behälter 2 konzentrisch zueinander angeordnet, wobei der erste Behälter 1 den zweiten Behälter 2 wenigstens teilweise umgibt. Die Trennwand zwischen dem ersten Behälter 1 und dem zweiten Behälter 2 ist in diesem Fall eine wärmedurchlässige Wand, umfasst also ein wärmeleitendes Material, beispielsweise Edelstahl. Die Wand kann dabei etwa 2 bis 3 mm dick sein. Die Wärmeleitfähigkeit des Materials der wärmedurchlässigen Wand kann insbesondere zwischen 15 und 60 W/(K·m) betragen. Es ist allerdings auch denkbar, die wärmedurchlässige Wand aus Kupfer zu gestalten, sodass die Wärmeleitfähigkeit mit in etwa 350 W/(m K) auch wesentlich höher sein kann.
Figur 2 zeigt außerdem einen Trockenlufttrockner 4. Dieser leitet Trockenluft in den Trocknungstrichter 3, welche am Kunststoffneumaterial vorbeigeführt und an den Trockenlufttrockner 4 zurückgeführt wird. Die Trockenluft dient in diesem Fall dazu, einen guten Wärmetransport zur wärmedurchlässigen Wand zu gewährleisten.

## Patentansprüche

1. Verfahren zum Herstellen von Kunststoffbehältern und/oder Kunststoffvorformlingen mit einer Spritzgießmaschine umfassend die Schritte:
Bereitstellen von Kunststoffrezyklat und Kunststoffneumaterial;
Erwärmen des Kunststoffrezyklats; und
Erwärmen des Kunststoffneumaterials unter Verwendung wenigstens eines Teils der im erwärmten Kunststoffrezyklat enthaltenen Wärmemenge;
wobei das Erwärmen des Kunststoffneumaterials umfasst:
Vorbeiführen eines Wärmetransportmittels am erwärmten Kunststoffrezyklat zum Erwärmen des Wärmetransportmittels; und
Vorbeiführen des erwärmten Wärmetransportmittels am Kunststoffneumaterial.

2. Verfahren nach Anspruch 1, wobei das Kunststoffrezyklat auf eine Temperatur erwärmt wird, die über der zum Einbringen und/oder Verarbeiten in der Spritzgießmaschine erforderlichen Temperatur liegt, und wobei wenigstens ein Teil der über der zum Einbringen und/oder Verarbeiten in der Spritzgießmaschine erforderlichen Temperatur liegenden Wärmemenge zum Erwärmen des Kunststoffneumaterials verwendet wird.

3. Verfahren nach Anspruch 1 oder 2, wobei das Kunststoffrezyklat derart erwärmt wird, dass das Kunststoffrezyklat durch das Erwärmen wenigstens teilweise dekontaminiert wird.

4. Verfahren nach einem der vorangegangenen Ansprüche, wobei das Kunststoffneumaterial auf eine Temperatur zwischen 140 °C und 180 °C, insbesondere auf 160 °C, erwärmt wird.

5. Verfahren nach Anspruch 1, wobei das Wärmetransportmittels Trockenluft und/oder Inertgas umfasst.

6. Verfahren nach einem der vorangegangenen Ansprüche, wobei das Wärmetransportmittel direkt und/oder indirekt am erwärmten Kunststoffrezyklat und/oder am Kunststoffneumaterial vorbeigeführt wird.

7. Verfahren nach einem der vorangegangenen Ansprüche, wobei das Wärmetransportmittel im Gegenstrom am erwärmten Kunststoffrezyklat und/oder am Kunststoffneumaterial vorbeigeführt wird.

8. Verfahren nach einem der vorangegangenen Ansprüche, wobei das Erwärmen des Kunststoffneumaterials ein Anordnen des erwärmten Kunststoffrezyklats und des Kunststoffneumaterials in zwei wenigstens teilweise durch eine wärmedurchlässige Wand verbundene Behälter (1; 2) umfasst.

9. Verfahren nach Anspruch 8, wobei die Wärmeleitfähigkeit der wärmedurchlässigen Wand wenigstens 15 W/(K·m), insbesondere wenigstens 40 W/(K·m), beträgt.

10. Verfahren nach Anspruch 8 oder 9, wobei der Behälter (2) für das Kunststoffneumaterial wenigstens teilweise im Inneren des Behälters (1) für das erwärmte Kunststoffrezyklat angeordnet ist.

11. Vorrichtung zum Herstellen von Kunststoffbehältern und/oder Kunststoffvorformlingen umfassend:
eine Spritzgießmaschine zum Spritzgießen der Kunststoffbehälter und/oder Kunststoffvorformlinge;
eine Heizvorrichtung zum Erwärmen von Kunststoffrezyklat;
eine Heizvorrichtung zum Erwärmen von Kunststoffneumaterial; und
eine Transportvorrichtung zum Transport eines Wärmetransportmittels, die derart ausgebildet ist, dass das Wärmetransportmittels am erwärmten Kunststoffrezyklat zum Erwärmen des Wärmetransportmittels vorbeigeführt wird, und dass das erwärmte Wärmetransportmittel am Kunststoffneumaterial vorbeigeführt wird,
wobei die Vorrichtung derart ausgebildet und/oder konfiguriert ist, dass wenigstens ein Teil der im erwärmten Kunststoffrezyklat enthaltenen Wärmemenge zum Erwärmen des Kunststoffneumaterials verwendet wird.

12. Vorrichtung nach Anspruch 11, außerdem umfassend einen Behälter (1) für das erwärmte Kunststoffrezyklat und einen Behälter (2) für das Kunststoffneumaterial, wobei die Behälter (1; 2) wenigstens teilweise durch eine wärmedurchlässige Wand verbunden sind.

13. Vorrichtung nach Anspruch 12, wobei der Behälter (2) für das Kunststoffneumaterial wenigstens teilweise im Inneren des Behälters (1) für das erwärmte Kunststoffrezyklat angeordnet ist.

## Claims

1. Method for producing plastic containers and/or plastic preforms using an injection molding machine, comprising the steps:
providing plastic recyclate and new plastic material;
heating the plastic recyclate; and
heating the new plastic material using at least a part of the heat contained in the heated plastic recyclate;
wherein the heating of the new plastic material comprises:
moving a heat transport means past the heated plastic recyclate for heating the heat transport means; and
moving the heated heat transport means past the new plastic material.

2. The method according to claim 1, wherein the plastic recyclate is heated to a temperature, which lies above the temperature required for inserting into and/or processing in the injection molding machine, and wherein at least a part of the heat above the temperature required for inserting into and/or processing in the injection molding machine is used for heating the new plastic material.

3. The method according to claim 1 or 2, wherein the plastic recyclate is heated such that the plastic recyclate is decontaminated at least partially via the heating.

4. The method according to one of the preceding claims, wherein the new plastic material is heated to a temperature between 140° C and 180° C, in particular to 160 °C.

5. The method according to claim 1, wherein the heat transport means comprises dry air and/or inert gas.

6. The method according to one of the preceding claims, wherein the heat transport means is moved past the heated plastic recyclate and/or the new plastic material directly and/or indirectly.

7. The method according to one of the preceding claims, wherein the heat transport means is moved past the heated plastic recyclate and/or the new plastic material in a counter flow.

8. The method according to one of the preceding claims, wherein the heating of the new plastic material comprises an arranging of the heated plastic recyclate and the new plastic material in two containers (1; 2), which are at least partially connected by a heat permeable wall.

9. The method according to claim 8, wherein the heat conductivity of the heat permeable wall is at least 15 W/(K·m), in particular at least 40 W/(K·m).

10. The method according to claim 8 or 9, wherein the container (2) for the new plastic material is arranged at least partially inside the container (1) for the heated plastic recyclate.

11. Device for producing plastic containers and/or plastic preforms, comprising:
an injection molding machine for injection molding the plastic containers and/or the plastic preforms;
a heating device for heating the plastic recyclate;
a heating device for heating the new plastic material; and
a transport device for the transport of a heat transport means, which is designed such that the heat transport means is moved past the heated plastic recyclate for heating the heat transport means and that the heated heat transport means is moved past the new plastic material,
wherein the device is designed and/or configured such that at least a part of the heat contained in the heated plastic recyclate is used for heating the new plastic material.

12. The device according to claim 11, further comprising a container (1) for the heated plastic recyclate and a container (2) for the new plastic material, wherein the respective containers (1; 2) are connected at least partially by a heat permeable wall.

13. The device according to claim 12, wherein the container (2) for the new plastic material is arranged at least partially inside the container (1) for the heated plastic recyclate.

## Revendications

1. Procédé de fabrication de contenants en matière plastique ou de préformes en matière plastique au moyen d'une machine de moulage par injection, comprenant les étapes suivantes :
préparation et fourniture de recyclat de matière plastique et de matière plastique nouvelle ;
échauffement du recyclat de matière plastique, et échauffement de la matière plastique nouvelle en utilisant au moins une partie de la quantité de chaleur renfermée dans le recyclat de matière plastique ayant été échauffé ;
procédé d'après lequel l'échauffement de la matière plastique nouvelle comprend les étapes consistant à :
faire passer un agent caloporteur sur le recyclat de matière plastique échauffé en vue d'échauffer l'agent caloporteur ; et
faire passer l'agent caloporteur échauffé sur la matière plastique nouvelle.

2. Procédé selon la revendication 1, d'après lequel le recyclat de matière plastique est échauffé à une température qui se situe au-dessus de la température nécessaire à l'introduction et/ou à la mise en oeuvre dans la machine de moulage par injection, et d'après lequel au moins une partie de la quantité de chaleur située au-dessus de celle correspondant à la température nécessaire pour l'introduction et/ou à la mise en oeuvre dans la machine de moulage par injection, est utilisée pour échauffer la matière plastique nouvelle.

3. Procédé selon la revendication 1 ou la revendication 2, d'après lequel le recyclat de matière plastique est décontaminé au moins partiellement par l'échauffement.

4. Procédé selon l'une des revendications précédentes, d'après lequel la matière plastique nouvelle est échauffée à une température entre 140°C et 180°C, notamment à 160°C.

5. Procédé selon la revendication 1, d'après lequel l'agent caloporteur comprend de l'air sec et/ou du gaz inerte.

6. Procédé selon l'une des revendications précédentes, d'après lequel on fait passer l'agent caloporteur directement et/ou indirectement sur le recyclat de matière plastique échauffé et/ou la matière plastique nouvelle.

7. Procédé selon l'une des revendications précédentes, d'après lequel on fait passer l'agent caloporteur à contre-courant sur le recyclat de matière plastique échauffé et/ou la matière plastique nouvelle.

8. Procédé selon l'une des revendications précédentes, d'après lequel l'échauffement de la matière plastique nouvelle comprend l'agencement du recyclat de matière plastique échauffé et de la matière plastique nouvelle dans deux réservoirs (1; 2) reliés au moins partiellement par une paroi perméable à la chaleur.

9. Procédé selon la revendication 8, d'après lequel la conductibilité thermique de la paroi perméable à la chaleur est d'au moins 15 W/(K•m), notamment d'au moins 40 W/(K•m).

10. Procédé selon la revendication 8 ou la revendication 9, d'après lequel le réservoir (2) pour la matière plastique nouvelle est agencé au moins en partie à l'intérieur du réservoir (1) pour le recyclat de matière plastique échauffé.

11. Dispositif pour la fabrication de contenants en matière plastique et/ou de préformes en matière plastique, comprenant :
une machine de moulage par injection pour assurer le moulage par injection des contenants en matière plastique et/ou des préformes en matière plastique ;
un dispositif de chauffage pour échauffer du recyclat de matière plastique ;
un dispositif de chauffage pour échauffer de la matière plastique nouvelle ; et
un dispositif de transport destiné à assurer le transport d'un agent caloporteur, qui est configuré de manière à faire passer l'agent caloporteur sur le recyclat de matière plastique ayant été échauffé en vue d'échauffer l'agent caloporteur, et de manière à faire passer l'agent caloporteur échauffé sur la matière plastique nouvelle,
le dispositif étant conçu et/ou configuré de manière à ce qu'au moins une partie de la quantité de chaleur renfermée dans le recyclat de matière plastique échauffé, soit utilisée pour échauffer la matière plastique nouvelle.

12. Dispositif selon la revendication 11, comprenant en outre un réservoir (1) pour le recyclat de matière plastique et un réservoir (2) pour la matière plastique nouvelle, les réservoirs (1; 2) étant reliés au moins partiellement par une paroi perméable à la chaleur.

13. Dispositif selon la revendication 12, dans lequel le réservoir (2) pour la matière plastique nouvelle est agencé au moins en partie à l'intérieur du réservoir (1) pour le recyclat de matière plastique échauffé.
